# EUROPEAN PATENT SPECIFICATION

(11) **EP 3 121 097 B1**
(45) Date of publication and mention of the grant of the patent: **01.08.2018**
(21) Application number: 15717939.1
(22) Date of filing: 18.03.2015
(51) Int. Cl.: B62J 7/04, B62J 7/08, B62J 9/00

(54) **SIDE CASES FASTENING DEVICE**
BEFESTIGUNGSVORRICHTUNG FÜR SEITENKOFFER
DISPOSITIF DE FIXATION POUR VALISE LATÉRALE

(30) Priority: 20.03.2014 ES 201430388
(43) Date of publication of application: 25.01.2017
(73) Proprietor: NAD, S.L., 08100 Mollet del Vallès (ES)
(72) Inventor: AYALA GONZALEZ, Pedro, E-08100 Mollet Del Vallès (Barcelona) (ES); BARCELÓ, Jorge Gustavo, E-08100 Mollet Del Vallès (Barcelona) (ES)
(74) Representative: Ponti & Partners, S.L.P
(86) International application number: PCT/ES2015/070193
(87) International publication number: WO 2015/140380

(56) References cited:
- EP-A2- 0 245 541
- WO-A1-2007/045371
- DE-A1- 3 226 445
- DE-U1- 8 315 720
- FR-A1- 2 769 573
- JP-A- S6 259 177
- JP-A- 2008 285 065
- JP-U- S5 624 390
- US-A- 5 439 149
- US-A1- 2005 150 921

## Description

The present invention relates to a fastening device for the fastening of side cases to the chassis of motorcycles and similar vehicles, and to a side case for coupling to a motorcycle bracket comprising said fastening device.

### Background of the invention

Cases of various configurations for attachment to the rear part of motorcycles are well known, said cases being comprised of a base and a cover articulatedly attached to the base, a locking device for the cover and a handle linked to said locking device, and articulatedly attached to the base of the case. Said cases enable the easy, safe transport of items on these vehicles.

Two types of cases are known, depending on their location on the motorcycle, a first type corresponding to the horizontal cases which are attachable to a bracket fixed to the upper rearmost part of the chassis of the motorcycle, and a second type, corresponding to the lateral side-cases which are attachable to a bracket fixed at one or both sides of the rear part of the chassis of the motorcycle, in the style of saddlebags.

The traditional systems for carrying side cases on motorcycles consist of supports in the form of a metallic framework fixed to the chassis of the motorcycle, and featuring a minimum of three attachment points on which the case is anchored.

The cases described feature a removable means of coupling to said support attached to the motorcycle, which enables their engagement or disengagement from the same by an actuating means, such as a trigger, lever or push-button located at the rear of the case, usually on its base.

Side cases whose means of coupling to the support on the motorcycle consist of two lower anchoring hooks and a third upper locking element, these three elements being integrated in the lateral base of the case, are well known. To facilitate installation, the case is first hung by its lower part, by means of its two lower anchoring hooks, on two complementary anchor points or a longitudinal bar corresponding to a lower section of the frame. Next, the case is swung upwards around said lower anchor points, which define an substantially horizontal axis, until the third, upper, retention element of the case becomes anchored at an upper part of the frame; finally, a locking element of the case is actuated in order to fix its position.

In another known type of side case, the coupling means to the frame on the motorcycle comprise two upper anchoring hooks and a third laterally arranged lower retention element, these three elements being integrated into the lateral base of the case. In this instance, the case is first hung by its upper part on an upper bar or rod of the frame by means of the two upper anchoring hooks; subsequently, the case is laterally displaced along said upper bar or rod of the frame until the third lower lateral retention element becomes anchored at a respective anchor point on the frame; finally, a locking element of the case is actuated in order to fix its position.

Likewise, other coupling means are known where in some instances it is necessary to insert simultaneously the three anchor points of the case into the respective anchor points of the frame.

All of these systems present functional issues, such as the difficulty to view the coupling means when the user brings the case near to the frame on the motorcycle in order to execute the anchoring of the same, likewise correctly fitting the anchor points simultaneously on the frame, this anchoring operation frequently being performed blind or with reduced visibility.

Another drawback of these known systems is that the frame, due to its rectangular configuration, is installed in front of the chains of the motorcycle, thus posing an aesthetic and aerodynamic issue, in addition to that of maintenance, as it may encumber the tasks of changing wheels, brakes, etc. A side cases fastening device according to the preamble of claim 1 is known from document EP0245541 A2. Said document also discloses a side case according to the preamble of claim 7.

### Description of the invention

The aim of the present invention is to provide a side cases fastening device for the fastening of side cases to the chassis of motorcycles or similar vehicles and which resolves the aforementioned drawbacks with the advantage of being simpler and more versatile, and guaranteeing a rapid and easy engagement and disengagement of the case with regard to the bracket on the motorcycle.

In accordance with this aim, and according to a first aspect, the present invention provides a side cases fastening device for the fastening of side cases to the chassis of motorcycles and similar vehicles of the type which comprises a bracket to be fixed to the chassis of a motorcycle and coupling means to be integrated in a lateral base of the case for its removable coupling to said bracket on the motorcycle. The bracket on the motorcycle comprises a substantially vertical first lateral stretch and a substantially horizontal second upper stretch, and by the fact that the coupling means of the case comprises a U-shaped clamp to be arranged at a lower lateral part of the base of the case, said U-shaped clamp being configured to be laterally coupled with turning and lateral pivoting capability around the substantially vertical first stretch of the bracket on the motorcycle, said coupling means further comprising two supporting elements to be arranged at an upper part of the base of the case, being configured to be coupled on the substantially horizontal second stretch of the bracket on the motorcycle subsequent to the turning and lateral pivoting of the case coupled by means of said clamp until a position is found which is suited for the insertion of the two supporting elements on said second stretch of the bracket.

In accordance with the same aim, and according to a second aspect, the present invention provides a side case for its coupling to a bracket to be fixed to the chassis of a motorcycle by means of the fastening device claimed. Said side case comprises an U-shaped clamp arranged at a lower lateral part of the base of the case, said clamp being configured to be laterally coupled with turning and lateral pivoting capability around a substantially vertical first stretch of a bracket on the motorcycle, and it further comprises two supporting elements arranged at an upper part of the base of the case, configured to be coupled to the substantially horizontal second stretch of the bracket on the motorcycle subsequent to the turning and lateral pivoting of the case.

On the one hand, a simpler, more versatile motorcycle bracket is obtained, as it features solely an upper horizontal stretch and a frontal vertical stretch, arranged in a position which is more integrated with the original chassis of the motorcycle, in comparison with the known rectangular metallic frames, as the sections of the frame located in front of the wheel have been eliminated. Consequently, the aesthetic, aerodynamic and maintenance issues have been improved, in addition to a considerable reduction in the total weight of the bracket.

On the other hand, due to the configuration of the coupling means of the case, this being a first lower lateral anchor point consisting of a U-shaped clamp with turning and lateral pivoting capability, and two upper anchor points in the form of hooks, a simple and easy engagement and disengagement of the case on the motorcycle bracket is achieved.

Likewise, improved visibility of the first lower lateral anchor point is achieved at the time of bringing the case close to the bracket, as said closening is performed laterally, in such a way that once the case is engaged on said first anchor point, it is only necessary to turn and pivot the case on said first anchor point round the substantially vertical stretch of the motorcycle bracket until the appropriate position is found, half of the weight being supported by said first point. The case is then hung on the horizontal stretch of the motorcycle bracket by means of both upper anchor points.

Preferably, both the substantially vertical and the substantially horizontal stretches of the motorcycle bracket consist of a single rotated L-shaped tubular item. Consequently, a structurally light bracket is obtained, which may be fixed to the motorcycle chassis with ease.

Advantageously, the fastening device further comprises means for locking the case on the motorcycle bracket. In this way, due to said locking means, detachment of the case due to the vibration of the motorcycle is prevented, as is theft of the case.

In accordance with a preferred embodiment, the locking means comprise a release lever articulatedly attached to the case and linked to a retention element susceptible to be locked on the substantially horizontal stretch of the motorcycle bracket, in such a way that on actuating the lever, said retention element retracts, releasing the case from the motorcycle bracket.

Preferably, the release lever comprises a lock with a key, in order to prevent its actuation.

Advantageously, the substantially horizontal stretch of the motorcycle bracket comprise at its extremity a stop element which is susceptible to contact laterally against a supporting element when in its position of use, thus to fix the position of the case in a horizontal direction between said stop element and the lower lateral clamp.

### Brief description of the drawings

For the better understanding of the above description, a set of drawings is attached in which, schematically and solely as a non-limitative example, a practical case of an embodiment of the device of this invention for the fastening of side cases to the chassis of motorcycles and similar vehicles is portrayed, wherein:
Figures 1a and 1b portray respectively a lateral view and a rear view of the rear part of the chassis of a motorcycle, on which a support for the coupling of a side case has been attached; said support comprises a frame-like shape such as those known in the state of the art;
Figures 2a and 2b portray respectively a lateral view and a rear view of the rear part of the chassis of a motorcycle, on which a bracket for the coupling of a side case has been attached; said bracket is L-shaped, in accordance with the present invention;
Figures 3a and 3b portray respectively a lateral view and a rear view of the rear part of the chassis of a motorcycle, with the case installed on the bracket of the present invention;
Figure 4 is a perspective view of a side case featuring the coupling means of the fastening device of the present invention, depicting the initial position of lateral closening to the motorcycle bracket;
Figure 5 is a perspective view of the case in figure 4, depicting the position of turning and pivoting of the case with regard to the motorcycle bracket;
Figure 6 is a perspective view of the case in figure 5, depicting the laterally pivoted position prior to the turning of the case with regard to the motorcycle bracket, and with the lever of the locking means actuated;
Figure 7 is a perspective view of the case in figure 6, depicting the final coupled position of the case on the motorcycle bracket, prior to the locking of the lever; and
Figure 8 is a perspective view of the case in figure 7, depicting the final coupled and locked position on the motorcycle bracket.

### Description of a preferred embodiment

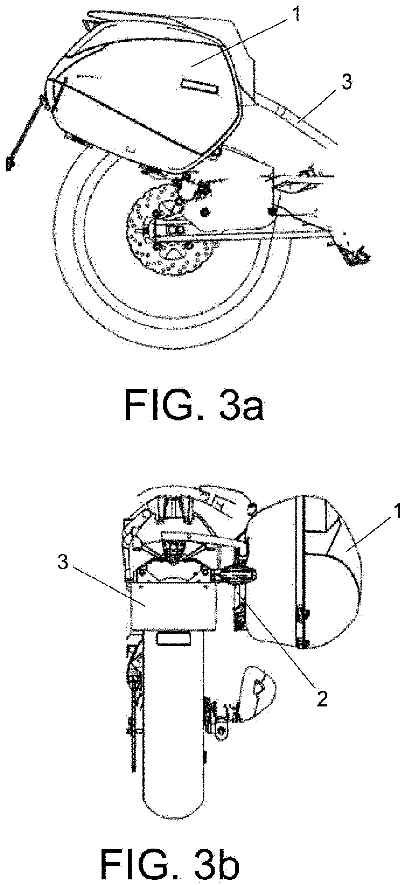

As may be seen in figures 3a and 3b, the fastening device of the present invention is applicable to side cases 1 featuring coupling means for their removable attachment to a bracket 2 fixed to the chassis of motorcycles 3 and similar vehicles.

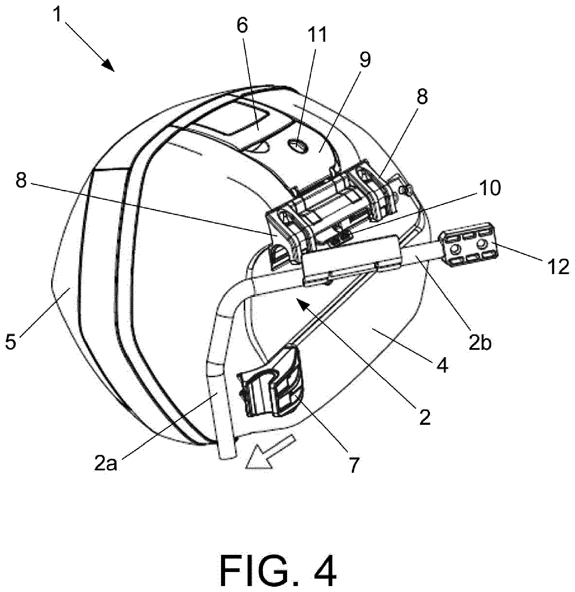

Generally, side cases 1 are of the type which comprise a lateral base 4 and a cover 5 articulatedly attached to the base 4, a locking device for the cover 5 and a carrying handle 6 linked to said locking device, in turn articulatedly attached to the base 4 of the case 1 for its opening, as may be seen for example in figure 4.

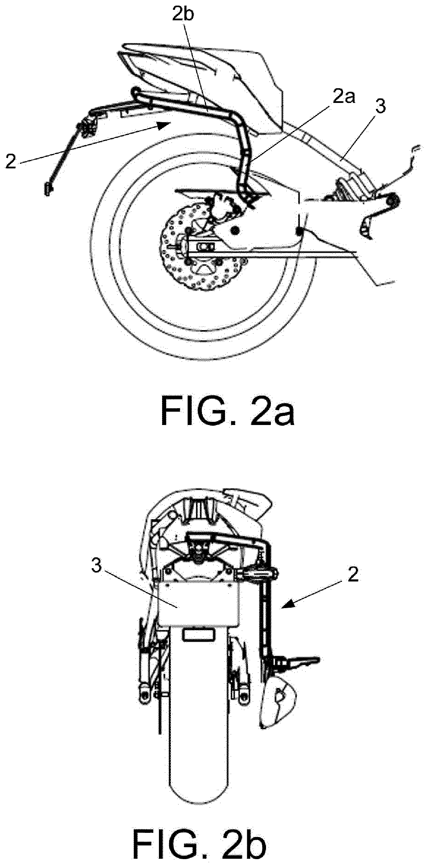

With reference to figures 2a and 2b, the fastening device of the invention comprises a bracket 2 fixed to the chassis of the motorcycle 3 and comprised of a single rotated L-shaped tubular item, featuring a first substantially vertical lateral stretch 2a and a second substantially horizontal upper stretch 2b.

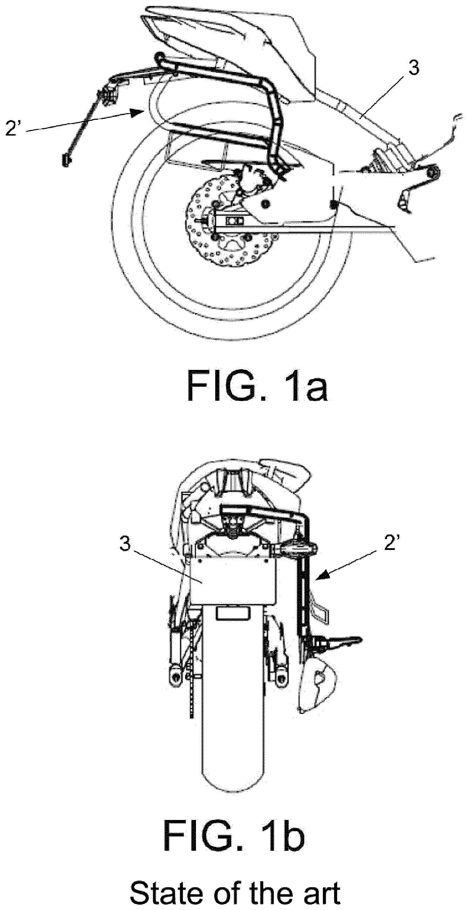

Figures 1a and 1b portray a frame-shaped support 2' of the type known in the state of the art. Said frame 2' presents a configuration such that it partially overlaps the rear wheel of the motorcycle 3. Conversely, the L-shaped bracket of the present invention (see figures 2a and 2b) is simpler and more versatile, as it comprises a single upper horizontal stretch 2b and a front vertical stretch 2a, arranged in a position which is more integrated with the original chassis of the motorcycle 3, as the stretches of the frame 2' which were in front of the rear wheel have been eliminated. Consequently, the aesthetic, aerodynamic and maintenance issues have been improved, in addition to achieving a considerable reduction in the total weight of the bracket 2.

The fastening device of the present invention further comprises a coupling means integrated in the base 4 of the case 1 for its removable attachment to the bracket 2 of the motorcycle, as may be seen in figures 3a and 3b.

With reference to figure 4 for example, said coupling means of the case 1 consist of a U-shaped clamp 7 arranged at a lower lateral part of the base 4 of the case 1, said clamp 7 being susceptible to be laterally coupled with turning and lateral pivoting capability around the substantially vertical first stretch 2a of the bracket 2 on the motorcycle 3, and two supporting elements 8 arranged at an upper part of the base 4 of the case 1, foreseen for their coupling on the substantially horizontal second stretch 2b of the bracket 2 on the motorcycle 3, subsequent to the turning and lateral pivoting of the case 1 attached by means of said clamp 7 until a position is found which is suited for the insertion of the two supporting elements 8 on said second stretch 2b of the bracket 2, as will be described below.

Likewise, the fastening device further comprises means for locking the case 1 on the bracket 2 of the motorcycle 3, which prevent detachment of the case 1 due to the vibration of the motorcycle 3, or the theft of said case.

In accordance with a preferred embodiment, the locking means consists of a release lever 9 articulatedly attached to the case 1 and linked to a retention element 10 susceptible to be locked on the substantially horizontal stretch 2b of the bracket 2 of the motorcycle 3, in such a way that on actuating the lever 9, said retention element 10 retracts, releasing the case 1 from the bracket 2 of the motorcycle 3. Furthermore, said lever 9 comprises a lock 11 with a key, in order to prevent its actuation.

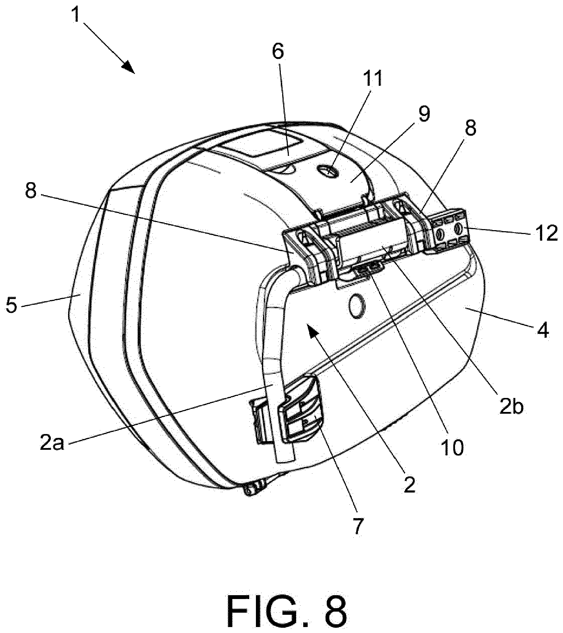

On the other hand, the substantially horizontal stretch 2b of the bracket 2 of the motorcycle 3 features at its extremity a stop element 12 which is susceptible to contact laterally against a supporting element 8 when in its position of use, thus to fix the position of the case 1 in a horizontal direction between said stop element 12 and the lower lateral clamp 5 (see figure 8).

With reference to figures 4 to 8, the process of engagement of the case 1 on the bracket 2 fixed to the chassis of the motorcycle 3 is described below. A number of arrows are included in said figures in order to indicate the movement of the case 1 performed by a user during the coupling of the case 1 on the bracket 2 of the motorcycle 3.

First, the user should laterally bring the case 1 close to the bracket 2 on the motorcycle (see arrow), as portrayed in figure 4.

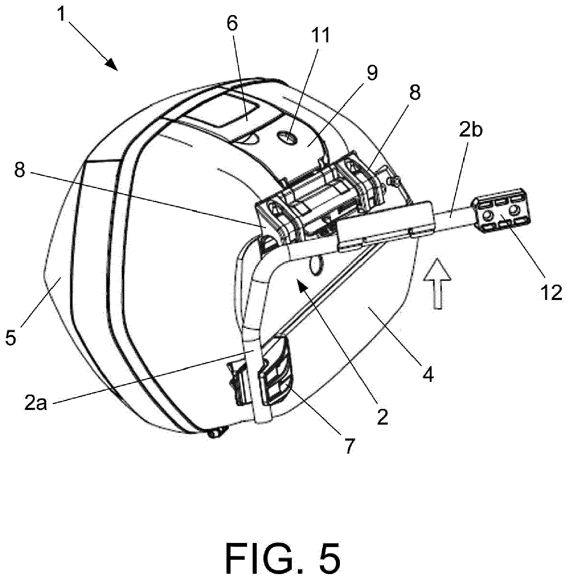

Next, as may be observed in figure 5, the lower lateral clamp 7 of the case 1 fits in the substantially vertical first stretch 2a of the bracket 2, then turning the case 1 round said first stretch 2a of the bracket 2 so that the base 4 is partially opposite said bracket 2. Next, the case 1 is pivoted laterally at the point of contact of the clamp 7 with regard to said first stretch 2a of the supporting element 8 (see arrow), until a position is found which is suited for the insertion of the two supporting elements 8 on the substantially horizontal second stretch 2b of the bracket 2, it being possible for said clamp 7 to slide along said first stretch 2a if necessary.

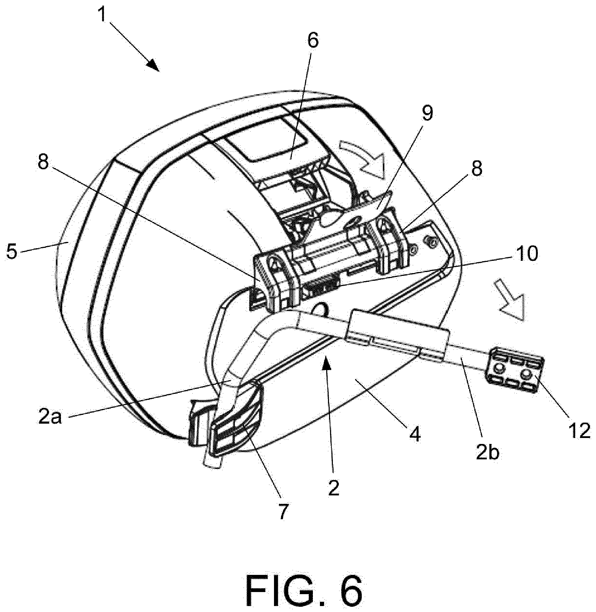

As may be seen in figure 6, the case 1 is then turned while maintaining its previous tilted position due to pivoting (see arrow) to get close the two upper supporting elements 8 above the substantially horizontal second stretch 2b of the bracket 2.

In turn, the user should actuate the locking means release lever 9 (see arrow) in order to retract the retention element 10 and to allow the passage of the two supporting elements 8 over said second stretch 2b of the bracket 2 in order to anchor the same.

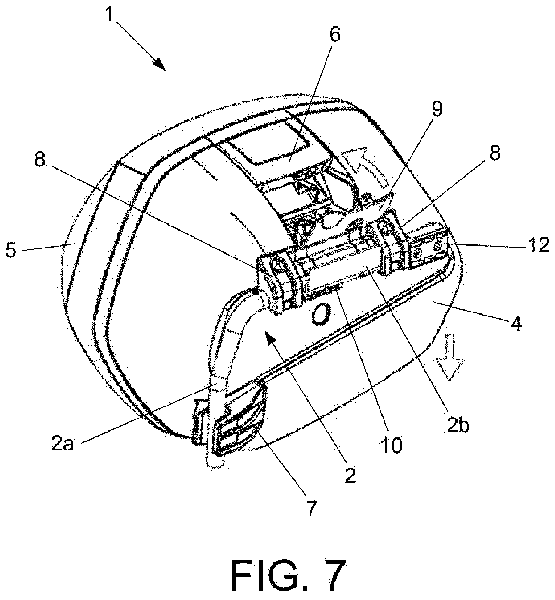

Finally, as may be seen in figure 7, the two upper supporting elements 8 are engaged on the second stretch 2b of the bracket (see arrow). Once the case 1 is coupled by its three anchor points 7, 8 on the bracket 2, the lever 9 is released (see arrow) to lock the case 1 to the bracket 2 by means of said retention element 10 which locks inferiorly under the substantially horizontal second stretch 2b of the bracket 2.

Figure 8 portrays the case 1 in its final position, coupled and locked to the bracket 2 of the motorcycle 3.

Due to the fastening device of the invention, improved visibility of the lower, lateral first anchor point 7 is obtained when bringing the case 1 close to the bracket 2, as said closening is performed laterally, in such a way that once the case 1 is engaged in said first anchor point 7, it is only necessary to turn and laterally pivot the case 1 on said first anchor point 7 around the substantially vertical stretch 2a of the bracket 2 of the motorcycle 3 until the appropriate position is found, half of the weight being supported by said first point 7. The case 1 is then hung on the horizontal stretch 2b of the bracket 2 of the motorcycle 3 by means of both upper anchor points 8.

While the foregoing has been with reference to a particular embodiment of the invention, it will be evident to a person skilled in the art that the device for the fastening of side cases to the chassis of motorcycles and similar vehicles described herein is susceptible to multiple variations or modifications, and all the details mentioned herein may be replaced by other technically equivalent details without departing from the scope of protection defined by the appended claims.

## Claims

1. A side cases fastening device for the fastening of side cases (1) to the chassis of motorcycles (3) and similar vehicles, comprising a bracket (2) to be fixed to the chassis of a motorcycle (3) and coupling means to be integrated in a lateral base (4) of the case (1) for its removable attachment to said bracket (2) of the motorcycle (3), the bracket (2) comprising a substantially vertical first stretch (2a) and a substantially horizontal upper second stretch (2b), said coupling means comprising two supporting elements (8) to be arranged at an upper part of the case (1), **characterized in that** said coupling means comprise an U-shaped clamp (7) to be arranged at a lower lateral part of the base (4) of the case (1) and configured to be laterally coupled with turning and lateral pivoting capability around the substantially vertical first stretch (2a) of the bracket (2) on the motorcycle (3), and said two supporting elements (8) being configured to be coupled on the substantially horizontal second stretch (2b) of the bracket (2) on the motorcycle (3) subsequent to the turning and lateral pivoting of the case (1) attached by means of said U-shaped clamp (7) until a position is found which is suited for the insertion of the two supporting elements (8) on said second stretch (2b) of the bracket (2).

2. A device, as claimed in claim 1, where both the substantially vertical stretch (2a) and the substantially horizontal stretch (2b) of the bracket (2) of the motorcycle (3) consist of a single rotated L-shaped tubular piece.

3. A device, as claimed in claim 1, which further comprises locking means (9, 10, 11) of the case (1) to the bracket (2) of the motorcycle (3).

4. A device, as claimed in claim 3, where the locking means comprise a release lever (9) to be articulatedly attached to the case (1) and linked to a retention element (10) susceptible to be locked on the substantially horizontal stretch (2b) of the bracket (2) of the motorcycle (3), in such a way that on actuating the lever (9), said retention element (10) retracts, releasing the case (1) from the bracket (2) of the motorcycle (3).

5. A device, as claimed in claim 4, where the release lever (9) comprises a lock (11) and key to block its operation.

6. A device, as claimed in claim 1, where the substantially horizontal stretch (2b) of the bracket (2) of the motorcycle (3) comprises at its extremity a stop element (12) which is susceptible to contact laterally against a supporting element (8) when in its position of use, thus to fix the position of the case (1) in a horizontal direction between said stop element (12) and the lower lateral clamp (7).

7. A side case (1) for coupling to a bracket (2) of a fastening device as claimed in any of claims 1 to 6, said side case (1) comprising two supporting elements (8) in the form of hooks arranged at an upper part of a base (4) of the case (1), **characterised in that** it further comprises an U-shaped clamp (7) arranged at a lower lateral part of the base (4) of the case (1), said U-shaped clamp (7) being configured to be laterally coupled with turning and lateral pivoting capability around a substantially vertical first stretch (2a) of said bracket (2) on a motorcycle, and said two supporting elements (8) are configured to be coupled to a substantially horizontal second stretch (2b) of the bracket (2) on the motorcycle (3) subsequent to the turning and lateral pivoting of the case (1).

## Patentansprüche

1. Eine Seitenkoffer-Befestigungsvorrichtung zur Befestigung von Seitenkoffern (1) an der Karosserie von Motorrädern (3) und ähnlichen Fahrzeugen, die eine Halterung (2), die an der Karosserie eines Motorrads (3) anzubringen ist, und eine Kopplungseinrichtung, die in einer seitlichen Basis (4) des Koffers (1) zum abnehmbaren Montieren desselben an der Halterung (2) des Motorrads (3) integriert werden soll, aufweist, wobei die Halterung (2) einen im Wesentlichen vertikalen ersten Abschnitt (2a) und einen im Wesentlichen horizontalen oberen zweiten Abschnitt (2b) aufweist, wobei die Kopplungseinrichtung zwei Trageelemente (8) aufweist, die an einem oberen Teil des Koffers (1) anzuordnen sind,
**dadurch gekennzeichnet, dass** die Kopplungseinrichtung eine U-förmige Klemme (7) aufweist, die an einem unteren lateralen Teil der Basis (4) des Koffers (1) anzuordnen ist und dazu konfiguriert ist, mit einer Dreh- und Seitschwenkfähigkeit um den im Wesentlichen vertikalen ersten Abschnitt (2a) der Halterung (2) an dem Motorrad (3) seitlich gekoppelt zu werden, und wobei die zwei Trageelemente (8) dazu konfiguriert sind, im Anschluss an das Drehen und das Seitschwenken des anhand der U-förmigen Klemme (7) montierten Koffers (1) an den im Wesentlichen horizontalen zweiten Abschnitt (2b) der Halterung (2) an dem Motorrad (3) gekoppelt zu werden, bis eine Position gefunden ist, die für die Einfügung der zwei Trageelemente (8) an dem zweiten Abschnitt (2b) der Halterung (2) geeignet ist.

2. Eine Vorrichtung gemäß Anspruch 1, bei der sowohl der im Wesentlichen vertikale Abschnitt (2a) als auch der im Wesentlichen horizontale Abschnitt (2b) der Halterung (2) des Motorrads (3) aus einem einzelnen gedrehten L-förmigen Rohrstück bestehen.

3. Eine Vorrichtung gemäß Anspruch 1, die ferner eine Absperreinrichtung (9, 10, 11) des Koffers (1) an der Halterung (2) des Motorrads (3) aufweist.

4. Eine Vorrichtung gemäß Anspruch 3, bei der die Absperreinrichtung einen Freigabehebel (9) aufweist, der auf angelenkte Weise an dem Koffer (1) zu montieren ist und mit einem Rückhalteelement (10) zu verbinden ist, das dafür empfänglich ist, an dem im Wesentlichen horizontalen Abschnitt (2b) der Halterung (2) des Motorrads (3) derart abgesperrt zu werden, dass sich bei Betätigung des Hebels (9) das Rückhalteelement (10) zurückzieht und dabei den Koffer (1) aus der Halterung (2) des Motorrads (3) freigibt.

5. Eine Vorrichtung gemäß Anspruch 4, bei der der Freigabehebel (9) ein Schloss (11) und einen Schlüssel zum Blockieren seiner Funktion aufweist.

6. Eine Vorrichtung gemäß Anspruch 1, bei der der im Wesentlichen horizontale Abschnitt (2b) der Halterung (2) des Motorrads (3) an seinem äußersten Ende ein Anschlagelement (12) aufweist, das dafür empfänglich ist, seitlich ein Trageelement (8) zu berühren, wenn es sich in einer Nutzungsposition befindet, um somit die Position des Koffers (1) in einer horizontalen Richtung zwischen dem Anschlagelement (12) und der unteren lateralen Klemme (7) zu sichern.

7. Ein Seitenkoffer (1) zum Koppeln an eine Halterung (2) einer Befestigungsvorrichtung gemäß einem der Ansprüche 1 bis 6, wobei der Seitenkoffer (1) zwei Trageelemente (8) in Form von Haken aufweist, die an einem oberen Teil einer Basis (4) des Koffers (1) angeordnet sind,
**dadurch gekennzeichnet, dass** er ferner eine U-förmige Klemme (7) aufweist, die an einem unteren lateralen Teil der Basis (4) des Koffers (1) angeordnet ist, wobei die U-förmige Klemme (7) dazu konfiguriert ist, mit einer Dreh- und Seitschwenkfähigkeit um einen im Wesentlichen vertikalen ersten Abschnitt (2a) der Halterung (2) an einem Motorrad seitlich gekoppelt zu werden, und wobei die zwei Trageelemente (8) dazu konfiguriert sind, im Anschluss an das Drehen und das Seitschwenken des Koffers (1) an einen im Wesentlichen horizontalen zweiten Abschnitt (2b) der Halterung (2) an dem Motorrad (3) gekoppelt zu werden.

## Revendications

1. Dispositif de fixation de sacoches latérales pour la fixation de sacoches latérales (1) sur le châssis des motocyclettes (3) et de véhicules similaires, comprenant un support (2) destiné à être fixé sur le châssis d'une motocyclette (3) et des moyens de couplage destinés à être intégrés dans une barre latérale (4) de la sacoche (1) pour sa fixation amovible sur ledit support (2) de la motocyclette (3), le support (2) comprenant une première extension sensiblement verticale (2a) et une seconde extension supérieure sensiblement horizontale (2b), lesdits moyens de couplage comprenant deux éléments de support (8) destinés à être agencés au niveau d'une partie supérieure de la sacoche (1),
**caractérisé en ce que** lesdits moyens de couplage comprennent une pince en forme de U (7) destinée à être agencée au niveau d'une partie latérale inférieure de la base (4) de la sacoche (1) et configurée pour être latéralement couplée avec une capacité de rotation et de pivotement latéral autour de la première extension sensiblement verticale (2a) du support (2) sur la motocyclette (3), et lesdits deux éléments de support (8) étant configurés pour être couplés sur la seconde extension sensiblement horizontale (2b) du support (2) sur la motocyclette (3) suite à la rotation et au pivotement latéral de la sacoche (1) fixée au moyen de ladite pince en forme de U (7) jusqu'à ce que l'on trouve une position qui est appropriée pour l'insertion des deux éléments de support (8) sur ladite seconde extension (2b) du support (2).

2. Dispositif selon la revendication 1, dans lequel l'extension sensiblement verticale (2a) ainsi que l'extension sensiblement horizontale (2b) du support (2) de la motocyclette (3) se composent d'une seule pièce tubulaire en forme de L entraînée en rotation.

3. Dispositif selon la revendication 1, qui comprend en outre des moyens de verrouillage (9, 10, 11) de la sacoche (1) par rapport au support (2) de la motocyclette (3).

4. Dispositif selon la revendication 3, dans lequel les moyens de verrouillage comprennent un levier de libération (9) destiné à être fixé, de manière articulée, sur la sacoche (1) et relié à un élément de retenue (10) susceptible d'être verrouillé sur l'extension sensiblement horizontale (2b) du support (2) de la motocyclette (3), de sorte que suite à l'actionnement de levier (9), ledit élément de retenue (10) se rétracte, libérant la sacoche (1) du support (2) de la motocyclette (3).

5. Dispositif selon la revendication 4, dans lequel le levier de libération (9) comprend un verrou (11) et une clé pour empêcher son fonctionnement.

6. Dispositif selon la revendication 1, dans lequel l'extension sensiblement horizontale (2b) du support (2) de la motocyclette (3) comprend au niveau de son extrémité, un élément de butée (12) qui est susceptible d'être en contact latéralement contre un élément de support (8) lorsqu'il est dans sa position d'utilisation, pour fixer ainsi la position de la sacoche (1) dans une direction horizontale entre ledit élément de butée (12) et la pince latérale inférieure (7).

7. Sacoche latérale (1) destinée à se coupler à un support (2) d'un dispositif de fixation selon l'une quelconque des revendications 1 à 6, ladite sacoche latérale (1) comprenant deux éléments de support (8) se présentant sous la forme de crochets agencés au niveau d'une partie supérieure d'une base (4) de la sacoche (1),
**caractérisée en ce qu'**elle comprend en outre une pince en forme de U (7) agencée au niveau d'une partie latérale inférieure de la base (4) de la sacoche (1), ladite pince en forme de U (7) étant configurée pour être couplée latéralement avec une capacité de rotation et de pivotement latéral autour d'une première extension sensiblement verticale (2a) dudit support (2) sur une motocyclette, et lesdits deux éléments de support (8) sont configurés pour être couplés à une seconde extension sensiblement horizontale (2b) du support (2) sur la motocyclette (3) suite à la rotation et au pivotement latéral de la sacoche (1).
